# EUROPEAN PATENT SPECIFICATION

(11) **EP 1 892 644 B1**
(45) Date of publication and mention of the grant of the patent: **13.04.2016**
(21) Application number: 07114762.3
(22) Date of filing: 22.08.2007
(51) Int. Cl.: G06K 7/00, G06K 19/07, G06K 19/077, G06K 7/10

(54) **Method and system for RFID communication**
Verfahren und System zur RFID-Kommunikation
Procédé et système pour communication RFID

(30) Priority: 23.08.2006 CA 2556783
(43) Date of publication of application: 27.02.2008
(73) Proprietor: Psion Inc., Mississauga, ON L5N 7J9 (CA)
(72) Inventor: Park, Eric, Missisauga, Ontario, L5A 4A5 (CA)
(74) Representative: Treleven, Colin

(56) References cited:
- US-A1- 2004 176 032

## Description

### FIELD OF INVENTION

The present invention relates to Radio Frequency Identification (RFID), and more specifically to a method and system for RFID communication.

### BACKGROUND OF THE INVENTION

As is inherent in the name, an RFID reader incorporates an RF radio for communication with tags. RFID readers will also generally incorporate a means for communication to and from the reader. In the case of wired readers, this means may be an Ethernet link or any other appropriate system and protocol. If the reader is a wireless system, the reader may incorporate a second radio, as is appropriate for wireless communications. Common radios include RF, 802.11 or Bluetooth radios depending on the nature of the reader and the system with which it is communicating. Additional radios may increase possible applications for an RFID reader system. However, the incorporation of the additional radios in a wireless device adds additional expense to the device. Further a user may incur costs associated with use of a wireless network for communications. Therefore, it is desirable to provide a method and system that has additional utilization of the RFID radio. US2004/176032 provides a system where a terminal may include an RFID tag reader that can simulate an RFID tag, when the RFID tag reader is in a powered down state. This arrangement shortens the set-up time for a communication session, when the terminal enters the field of another RFID reader.

### SUMMARY OF THE INVENTION

It is an object of the invention to provide an apparatus and a method that obviate or mitigate at least one of the disadvantages/limitations of existing systems. In accordance with a first aspect, the present invention comprises an apparatus in accordance with appended independent claim 1. In accordance with a second aspect, the present invention comprises a method in accordance with appended independent claim 7.

In accordance with a further aspect of the present invention, there is provided a Radio Frequency Identification, RFID, reader including a printed circuit board, PCB. The PCB comprises a built-in RFID read-write tag uniquely assigned to the RFID reader and integrated into the RFID reader. The built-in RFID read-write tag includes RFID tag circuitry having a memory and first RF communication circuitry adapted for communicating with an external RFID reader. A reader circuitry is adapted for reading from or writing information on RFID tags including the built-in RFID read-write tag and an external tag. A second RF communication circuitry is coupled to the reader circuitry and adapted for communication with the external RFID tag. A circuit link is adapted for coupling the RFID tag circuitry to the reader circuitry, the built-in RFID read-write tag communicating with the reader circuitry via the circuit link and communicating with the external RFID reader via the first RF communication circuitry.

In accordance with a further aspect of the present invention, there is provided a method for RFID communication with a RFID reader including a printed circuit board, PCB. The PCB comprises a built-in RFID read-write tag uniquely assigned to the RFID reader and integrated into the RFID reader circuitry, the built-in RFID read-write tag including RFID tag circuitry having a memory and RF communication circuitry adapted for communicating with an external RFID reader. The RFID reader further comprises a reader circuitry for reading and writing information on RFID tags including the built-in RFID read-write tag and an external tag, a second RF communication circuitry coupled to the reader circuitry and adapted for communication with the external RFID tag, a circuit link adapted for coupling the RFID tag circuitry to the reader circuitry, and an interface adapted for communication with an external device. The method comprises transferring an identification of the built-in RFID read-write tag to the external RFID reader via the first RF communication circuitry of the built-in RFID read-write tag, receiving, in the first RF communication circuitry of the built-in RFID read-write tag, information from the external RFID reader, and indicating to the RFID reader via the circuit link that the built-in RFID read-write tag has received the information. The method further comprises providing the information received from the external RFID reader to the RFID reader via the circuit link, the information provided from the external RFID reader including information on configuration of the external device, and transferring to the external device the information on configuration of the external device from the RFID reader via the interface. The method further comprises receiving, in the external device, the information on configuration of the external device from the RFID reader, and implementing, in the external device, the configuration based on the configuration information transferred from the RFID reader.

The dependent claims provide features and steps of detailed embodiments. This summary of the invention does not necessarily describe all features of the invention.

### BRIEF DESCRIPTION OF THE DRAWINGS

These and other features of the invention will become more apparent from the following description in which reference is made to the appended drawings wherein:
Figure 1 is a schematic diagram illustrating an RFID reader in accordance with an embodiment of the present invention;
Figure 2 is a schematic diagram illustrating an example of circuitry components within the RFID reader of Figure 1;
Figure 3 is a schematic diagram illustrating an RFID reader system in accordance with an embodiment of the present invention;
Figure 4 is a schematic diagram illustrating an example of a network including an RFID tag assigned to the RFID reader;
Figure 5 is a schematic diagram illustrating another example of a network including the RFID tag assigned to the RFID reader; and
Figure 6 is a schematic diagram illustrating a further example of a network including the RFID tag assigned to the RFID reader; and
Figure 7 is a flowchart illustrating an example of a method for RFID based communication in accordance with an embodiment of the present invention.

### DETAILED DESCRIPTION

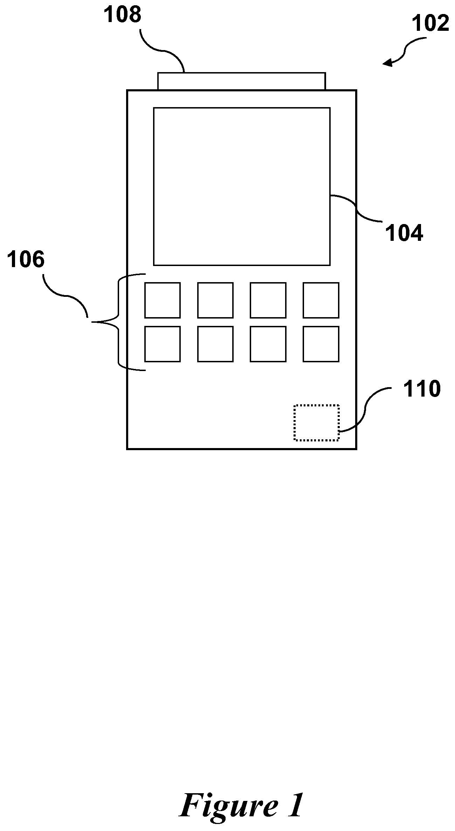

Figure 1 illustrates an RFID reader in accordance with an embodiment of the present invention. The RFID reader 102 of Figure 1 includes a display 104 and input keys 106. It is apparent that only a few representational keys 106 are presented in Figure 1 and the embodiment of the present invention is by no means to be limited to the number of keys 106.

The RFID reader 102 includes an RFID tag 110, which is shown in a dashed line and is integrated within the RFID reader 102. The RFID tag 110 is uniquely assigned to the RFID reader 102, and has a fixed unique identification ID.

The RFID reader 102 communicates with the RFID tag 110 via a circuit link as described below. The RFID reader 102 communicates with tags other than the RFID tag 110 through an RFID antenna 108. The RFID reader 102 may use a wired or some other wireless radio protocol to communicate with other devices/computers.

The RFID tag 110 is a read-write RFID tag and has functionality of communicating with RFID readers, which may include RFID reader-writers. The RFID tag 110 also has functionality of communicating with circuitry for operating the RFID reader 102. Thus, the RFID reader 102 can communicate with any other RFID readers through its RFID tag 110.

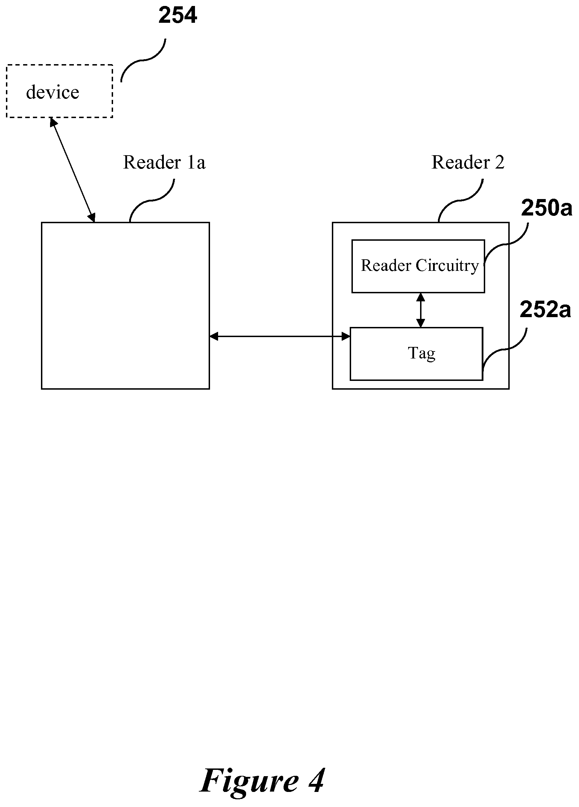

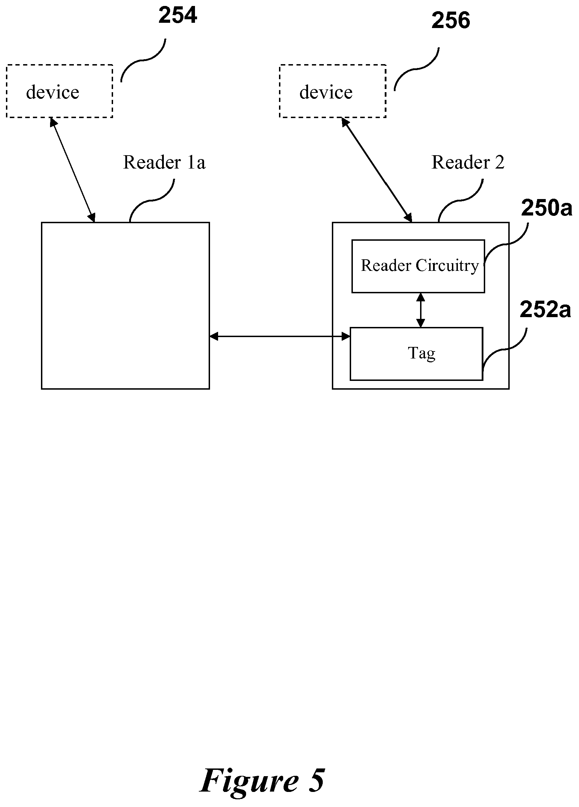

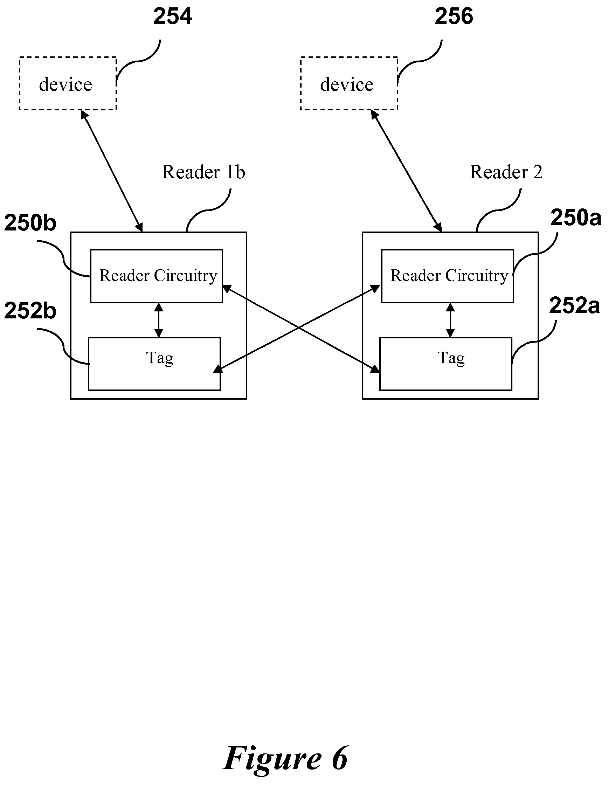

The RFID tag 110 receives and stores information provided from an RFID reader other than the RFID reader 102 (e.g., 1a of Figure 4-5, 1b of Figure 6) using RF signals (108). The RFID reader 102 reads the information provided from the other RFID reader(s) to its own RFID tag 110 through RFID read operation(s). The information read by the RFID reader 102 from the RFID tag 110 may be provided to a device communicating with the RFID reader 102 (e.g., 256 of Figures 5-6). The information read from the RFID tag 110 may be used for applications in the RFID reader 102 or the device communicating with the RFID reader 102, which may include time dependent applications, applications for control decisions, or custom communications. The information read from the RFID tag 110 may include information on configuration of the RFID reader 102 or the device communicating with the RFID reader 102. The RFID reader 102 or the device communicating with the RFID reader 102 may be customized using the information read from the RFID tag 110.

The RFID tag 110 may be an active tag that is self-powered, or a passive tag that derives its energy from an RF signal. In the description, "RF signal" and "RFID signal" may be used interchangeably. Communications with the RFID tag 110 may use "Tag-Talks-First (TTF)" protocol or "Reader-Talks-First (RTF)" protocol.

In Figure 1, the RFID reader 102 is shown as a wireless hand-held device. However, the RFID reader 102 may be a portal reader. The RFID reader 102 may be an RFID reader-writer.

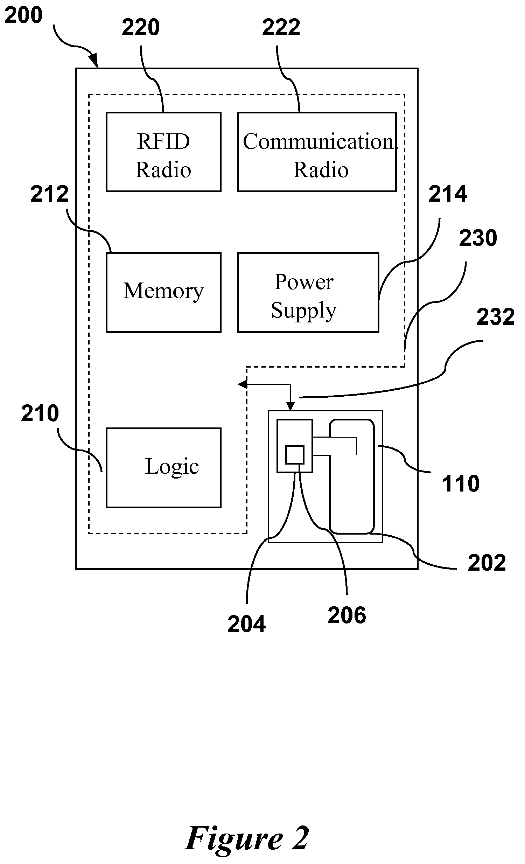

Figure 2 illustrates an example of a printed circuit board (PCB) 200 that is located within the RFID reader 102. In Figure 2, the RFID tag 110 is incorporated as a circuit on the PCB 200 within the RFID reader 102. As such the circuitry of the RFID tag 110 is wired to the circuitry 230 of the RFID reader 102, and is coupled to the reader circuitry 230 via a circuit link 232.

The RFID tag 110 includes an antenna section 202. The antenna section 202 includes an antenna and a circuit for receiving and transmitting data through the antenna using RF signals. Using the RF antenna section 202, the RFID tag 110 communicates with readers other than the RFID reader 102 to which the RFID tag 110 is attached. Those of skill in the art will understand that the representation of the antenna section 202 is schematic only, and the actual configuration of the antenna section 202 may take on a variety of configurations.

The RFID tag 110 includes circuitry 204 and a memory 206. The circuitry 204 includes a circuit for communicating with RFID readers and for interfacing the antenna section 202 and the memory 206. The circuitry 204 has functionality of retrieving data from the memory 206, transmitting the data in the memory 206 via the antenna section 202, and receiving data from the antenna section 202 and writing it into the memory 206. The circuitry 204 also has functionality of communicating with the reader circuitry 230 over the circuit link 232.

The memory 206 has instructions and data for the operation of the circuitry 204. The memory 206 includes an identification circuit for storing the identification ID of the RFID tag 110. The memory 206 is also used to store information specific to the RFID reader 102 to which it is attached, information specific to a device communicating with the RFID reader 102 (e.g., 256 of Figures 5-6), or a combination thereof.

The memory 206 includes a read-write non-volatile memory. As would be apparent to one skilled in the art the memory 206 may be EEPROM, Flash, FRAM or any other non-volatile memory that may provide for the operational requirements of the RFID tag 110.

The reader circuitry 230 is provided for the operation of the RFID reader 102. The reader circuitry 230 includes a logic integrated circuit 210, which may be a microcontroller or microprocessor as will be apparent to one skilled in the art. The reader circuitry 230 also includes a memory 212. The memory 212 includes, for example, a Random Access Memory (RAM) and a Read-Only Memory (ROM). The element(s) of the reader circuitry 230 communicates with the circuitry 204 of the RFID tag 110 via the circuit link 232 without using RFID signals.

The memory 212 has instructions and data for initializing and operating the RFID reader 102. The memory 212 has instructions and data for communicating (e.g., interrogation, read, write) with tags including the RFID tag 110, and for communication with a device, such as a computer-based system.

The reader circuitry 230 further includes power supply 214. The power supply 214 may be shared with the RFID tag 110 in the RFID reader 102.

Radio communications are provided by RFID radio 220. The RFID radio 220 communicates with RFID tags other than the RFID tag 110 at a frequency appropriate for the tags and which has been selected with consideration to the application for which the tags are being used.

The RFID reader 102 includes communications radio 222. The communications radio 222 is a non-RFID radio for communications to and from the RFID reader 102. The communications radio 222 may include, but not limited to, an interface for wireless network communications by IEEE 802.11, Bluetooth, etc. The communications radio 222 may be appropriate for cellular communications or may be appropriate for other radio communications. However, the RFID reader 102 may not include the communications radio 222. For example, the RFID reader 102 may be attached to a hand held terminal, which performs radio communications. In this case, the RFID reader 102 is not required to have the communications radio 222.

In Figure 2, all elements are illustrated separately. However, some or all of these blocks can be monolithically integrated onto a single chip. It will be apparent to one skilled in the art that an RFID reader may contain blocks and/or circuitry that is not shown in Figure 2.

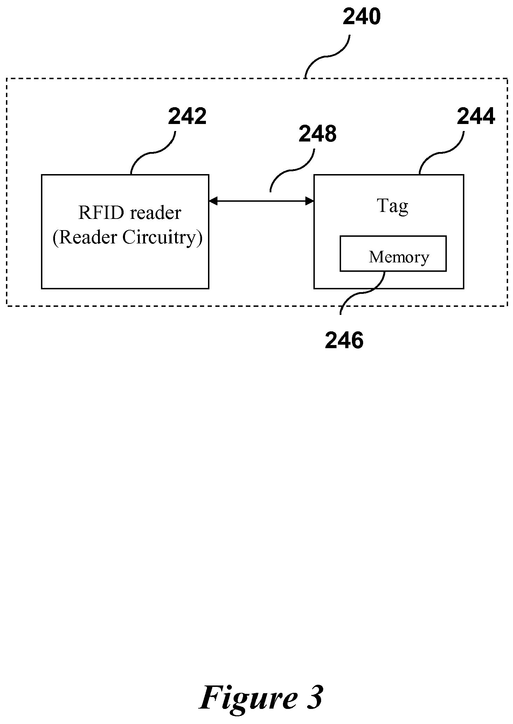

In Figures 1-2, the RFID tag 110 attached to the RFID reader 102 is a built-in tag and is integrated into the circuitry of the RFID reader 102 on the PCB 200. However, in an alternative embodiment, an RFID tag uniquely assigned to an RFID reader is not integrated into the RFID reader, and communicates with the RFID reader over an RF antenna as shown in Figure 3.

Figure 3 illustrates an RFID reader system in accordance with an embodiment of the present invention. The RFID reader system 240 of Figure 3 includes an RFID reader (reader circuitry) 242 and an RFID tag 244. The reader circuitry of the RFID reader 242 may be same or similar to the reader circuitry 230 of Figure 2, and is provided for RFID operations (e.g., integration, read, write) on tags including the RFID tag 244.

The RFID tag 244 is provided within the vicinity of the RFID reader 242. The RFID tag 244 is uniquely assigned to the RFID reader 242, and has a uniquely assigned identification ID.

The RFID tag 244 is a read-write tag and has functionality of communicating with RFID readers, including the RFID reader 242. The RFID tag 244 communicates with circuitry for operating the RFID reader 242 using RFID signals 248. The RFID tag 244 includes a memory 246. The memory 246 has instructions and data for the operation of the RFID tag 244. The memory 246 includes an identification circuit for storing the identification ID of the RFID tag 244. The memory 246 is also used to store information specific to the RFID reader 242 to which it is assigned, information specific to a device communicating with the RFID reader 242 (e.g., 256 of Figures 5-6), or a combination thereof. The RFID tag 244 may be similar to the RFID tag 110 of Figure 2. However, in this example, the RFID tag 244 is a stand-alone tag.

The RFID tag 244 is capable of receiving and storing information provided from an RFID reader(s) other than the RFID reader 242 (e.g., 1a of Figure 4-5, 1b of Figure 6). The RFID reader 242 reads the information provided to the RFID tag 244 from the other RFID reader(s) through RFID read operation(s). For example, the RFID reader 242 or a device communicating with the RFID reader 242 polls by RFID read operation(s) on its own tag 244 and reads the specific information provided from the other RFID reader(s) to the RFID tag 244. The RFID reader 242 or the device communicating with the RFID reader 242 may use information read from its RFID tag 244 for a time dependent application or a control decision. The RFID reader 242 or the device communicating with the RFID reader 242 may be configured based on the information read from the RFID tag 244. The RFID reader 242 or the device communicating with the RFID reader 242 may be customized using the information read from the RFID tag 244.

The RFID reader 242 may be a portal reader. However, the RFID reader 242 may be a wireless hand-held device. The RFID reader 242 may be an RFID reader/writer. The RFID tag 244 may be an active tag, or a passive tag. Communications with the RFID tag 244 may employ "Tag-Talks-First (TTF)" protocol or "Reader-Talks-First (RTF)" protocol.

Figure 4 illustrates an example of a network having an RFID tag assigned to the RFID reader. In Figure 4, an RFID reader 1a and an RFID reader 2 are shown as examples of RFID readers in the network. The RFID reader 2 includes reader circuitry 250a and an RFID tag 252a. The RFID reader 2 may be same or similar to the RFID reader 102 of Figure 1 or the RFID reader system 240 of Figure 3.

The RFID tag 252a is uniquely assigned to the RFID reader 2, and has a unique identification ID. The RFID tag 252a may be same or similar to the RFID tag 110 of Figures 1-2 or the RFID tag 244 of Figure 3. The RFID tag 252a may be a built-in tag integrated with the reader circuitry 250a or a stand-alone tag communicating with the reader circuitry 250a using RF signals.

The RFID reader 1a may or may not have a tag. The RFID reader 1a has functionality of communicating with tags including the RFID tag 252a, which includes write operation on the tags. The RFID tag 252a receives information from the RFID reader 1a and transmits it to the reader circuitry 250a.

The RFID reader 1a communicates with a device 254 (e.g., computer system) in a wired or wireless network. The device 254 may include an application and a database. The application may be located in the RFID reader 1a. The device 254 uses the RFID reader 1a to write information into the RFID tag 252a. The RFID tag 252a receives the information from the RFID reader 1a, and stores the information into its memory. The RFID reader 2 polls by performing RFID read operations on its RFID tag 252a to read the information from the RFID reader 1a to the RFID tag 252a.

The RFID reader 2 may use information read from its RFID tag 252a for a time dependent application or a control decision. The device 254 may provide to the RFID tag 252a information associated with configuration of the RFID reader 2, resulting in remote configuration of the RFID reader 2.

The information provide from the RFID reader 1a to the RFID tag 252a may further include, but not limited to, a source identification for identifying a source of the information, a target identification for identifying a target to which the information is provided, and/or any other information.

Figure 5 illustrates another example of a network having the RFID tag assigned to the RFID reader. In Figure 5, the RFID reader 2 communicates with a device 256 (e.g., computer system) in a wired or wireless network. The device 256 may include an application and a database. The application may be located in the RFID reader 2. The device 254 uses the RFID reader 1a to write information into the RFID tag 252a. The RFID reader 2 or the device 256 polls by performing RFID read operations on the RFID tag 262a to read the information from the device 254.

The RFID reader 2 or the device 256 may use information read from the RFID tag 252a for a time dependent application or a control decision. The device 254 may provide to the RFID tag 252a information associated with configuration of the device 256, resulting in remote configuration of the device 256.

Figure 6 illustrates a further example of a network having the RFID tag assigned to the RFID reader. In Figure 6, an RFID reader 1b communicates with the RFID reader 2 and the device 254. The RFID reader 1b includes reader circuitry 250b and an RFID tag 252b. The reader circuitry 250b and the RFID tag 252b are same or similar to the reader circuitry 250a and the RFID tag 252a of the RFID reader 2, respectively. Each reader circuitry 250a, 250b includes functionality of writing data into tags. The RFID tag 252b is uniquely assigned to the RFID reader 1b. The RFID tag 252b has a fixed unique identification ID. The RFID tag 252b may be a built-in tag or a stand-alone tag. The device 254 uses the RFID reader 1b to write information into the RFID tag 252a. The device 256 uses the RFID reader 2 to write information into the RFID tag 252b.

The RFID reader 2 or the device 256 may use information read from the RFID tag 252a for a time dependent application or a control decision. The RFID reader 1b or the device 254 may use information read from the RFID tag 252b for a time dependent application or a control decision. The device 254 may provide to the RFID tag 252a information associated with configuration of the RFID reader 2, the device 256 or a combination thereof. The device 256 may provide to the RFID tag 252b information associated with configuration of the RFID reader 1b, the device 254 or a combination thereof.

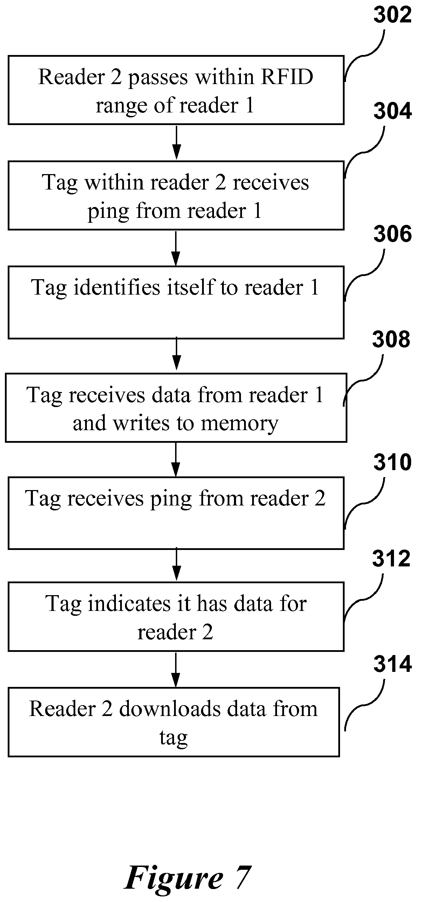

Figure 7 illustrates an example of a method for RFID based communication in accordance with an embodiment of the present invention. For the purposes of the method presented in Figure 7, an RFID reader 1 may or may not have a tag. The RFID reader 1 may be the RFID reader 1a of Figures 4-5 or the RFID reader 1b of Figure 6.

Referring to Figures 4-7, at step 302 the RFID reader 2 passes within RFID range of the RFID reader 1. The tag uniquely assigned to the RFID reader 2 receives a ping from the RFID reader 1 at step 304 and then identifies itself to the RFID reader 1 at step 306. At step 308 the tag assigned to the RFID reader 2 receives data from the RFID reader 1 and writes it to internal memory (e.g., 206 of Figure 2, 246 of Figure 3). At step 310 the tag receives a ping from the RFID reader 2 and indicates it has data for the RFID reader 2 at step 312. At step 314 the RFID reader 2 downloads the data from the tag.

The steps of Figure 7 are applicable to the built-in tag of Figure 1 and the stand-alone tag of Figure 3.

The method of Figure 7 can be used within the following two example situations. In the first situation a distribution warehouse has a portal RFID reader (RFID reader 1), and one or more forklifts with an RFID reader (RFID reader 2) located thereon. When the forklift passes through the portal information is transmitted to the RFID reader 2 located on the forklift via its tag. This information can then be displayed on a monitor attached to and operating in conjunction with the RFID reader 2. In one scenario this information indicates where items being transported by the forklift should be delivered. From the perspective of the reader 1, when a forklift passes within its RFID range, software controlling the RFID reader 1 writes data to the tag of the RFID reader 2. Software controlling the RFID reader 2 then polls for any updated information on its tag to determine what information to print onto the screen associated therewith. In this example the RFID reader 2 obtains information without using its communications radio (e.g., 222 of Figure 2) for these software updates. Rather having RFID reader 1 wired to and in communications with an additional network, the updates are provided from the network to the RFID reader with the RFID communications network.

In a second example, the RFID reader 2 is a portal RFID reader, and an RFID tag uniquely assigned to the RFID reader 2 is used to configure the portal. For example, configurational or update information is written to the RFID tag of the RFID reader 2 when a second RFID reader passes therethrough. The RFID reader 2 then reads the configuration information from its own RFID tag.

The present invention has been described with regard to one or more embodiments. However, it will be apparent to persons skilled in the art that a number of variations and modifications can be made without departing from the scope of the invention as defined in the claims.

## Claims

1. A Radio Frequency Identification, RFID, reader (102) including a printed circuit board, PCB, the PCB (200) comprising:
a built-in RFID read-write tag (110) uniquely assigned to the RFID reader (102) and integrated into the RFID reader (102), the built-in RFID read-write tag (110) including RFID tag circuitry having a memory (206) and first RF communication circuitry (204) adapted for communicating with an external RFID reader (1a, 1b);
a reader circuitry (230) adapted for reading from or writing information on RFID tags including the built-in RFID read-write tag (110) and an external tag;
a second RF communication circuitry (220) coupled to the reader circuitry (230) and adapted for communication with the external RFID tag; and
a circuit link (232) adapted for coupling the RFID tag circuitry to the reader circuitry (230), the built-in RFID read-write tag (110) communicating with the reader circuitry (230) via the circuit link (232) and communicating with the external RFID reader (1a, 1b) via the first RF communication circuitry (204).

2. A RFID reader (102) as claimed in claim 1, wherein the reader circuitry (230) cooperates with the built-in RFID read-write tag (110) to read the information from the memory (206).

3. A RFID reader (102) as claimed in claim 1 or claim 2, wherein the RFID reader (102) and the external RFID reader (1a, 1b) communicate with the built-in RFID read-write tag (110) in dependence upon an identification uniquely assigned to the RFID read-write tag (110).

4. A RFID reader (102) as claimed in any one of claims 1-3, wherein the built-in RFID read-write tag (110) is configured to receive, from the external RFID reader (1a, 1b), information for a time dependent application or a control decision.

5. A RFID reader (102) as claimed in anyone of claims 1-3, wherein the built-in RFID read-write tag (110) is configured to receive, from the external RFID reader (1a, 1b), information on configuration of an external device (256), and wherein the RFID reader (102) comprises an interface for communication with the external device (256) such that the information on configuration of the external device (256) is provided from the RFID reader (102) to the external device (256) via the interface.

6. A RFID reader (102) as claimed in anyone of claims 1-5, wherein the RFID reader (102) includes a power supply (214) for providing power to the reader circuitry (230) and the built-in RFID read-write tag (110).

7. A method for Radio Frequency Identification, RFID, communication with a RFID reader (102) including a printed circuit board, PCB, the PCB (200) comprising:
a built-in RFID read-write tag (110) uniquely assigned to the RFID reader (102) and integrated into the RFID reader circuitry (230), the built-in RFID read-write tag (110) including RFID tag circuitry having a memory (206) and RF communication circuitry (204) adapted for communicating with an external RFID reader (1a, 1b), the RFID reader (102) further comprising a reader circuitry (230) for reading and writing information on RFID tags including the built-in RFID read-write tag (110) and an external tag, a second RF communication circuitry (220) coupled to the reader circuitry (230) and adapted for communication with the external RFID tag, a circuit link (232) adapted for coupling the RFID tag circuitry to the reader circuitry (230), and an interface adapted for communication with an external device (256),
the method comprising:
transferring (306) an identification of the built-in RFID read-write tag (110) to the external RFID reader (1a, 1b) via the first RF communication circuitry (204) of the built-in RFID read-write tag (110);
receiving (308), in the first RF communication circuitry (204) of the built-in RFID read-write tag (110), information from the external RFID reader (1a, 1b);
indicating (312) to the RFID reader (102) via the circuit link (232) that the built-in RFID read-write tag (110) has received the information;
providing (314) the information received from the external RFID reader (1a, 1b) to the RFID reader (102) via the circuit link (232), the information provided from the external RFID reader (1a, 1b) including information on configuration of the external device (256);
transferring to the external device (256) the information on configuration of the external device (256), from the RFID reader (102) via the interface;
receiving, in the external device (256), the information on configuration of the external device (256) from the RFID reader (102); and
implementing, in the external device (256), the configuration based on the configuration information transferred from the RFID reader (102).

8. A method as claimed in claim 7, further comprising the step of:
in the built-in RFID read-write tag (110), receiving (304) a ping from the external RFID reader (1 a, 1 b), the step of transferring (306) an identification being executed after the ping from the external RFID reader (1a, 1b) is received.

9. A method as claimed in claim 7 or 8, further comprising the step of:
in the built-in RFID read-write tag (110), receiving (310) a ping from the RFID reader (102) via the circuit link (232), the step of indicating (312) being executed after the ping from the RFID reader (102) is received.

10. A method as claimed in anyone of claims 7-9, further comprising the step of:
in the RFID reader (102) or the external device (256), processing the information read from the built-in RFID read-write tag (110) for a time dependent application or a control decision.

11. A method as claimed in anyone of claims 7-9, wherein the information transferred (306) from the external RFID reader (1 a, 1b) through the RFID read-write tag (110) includes information on configuration of the RFID reader (102).

## Patentansprüche

1. RFID-Leser (102) ("Radio Frequency Identification reader") mit einer Leiterplatte ("printed circuit board" (PCB)), wobei die PCB (200) umfasst:
einen eingebauten RFID-Lese-Schreib-Tag (110), der dem RFID-Leser (102) eindeutig zugeordnet ist und in den RFID-Leser (102) integriert ist, wobei der eingebaute RFID-Lese-Schreib-Tag (110) eine RFID-Tag-Schaltung enthält, die einen Speicher (206) aufweist, und eine erste RF-Kommunikationsschaltung (204), die geeignet ist, mit einem externen RFID-Leser (1a, 1 b) zu kommunizieren;
eine Leserschaltung (230), die geeignet ist, um Information aus RFID-Tags zu lesen oder auf diese zu schreiben, einschließlich des eingebauten RFID-Lese-Schreib-Tags (110) und eines externen Tags;
eine zweite RF-Kommunikationsschaltung (220), die mit der Leserschaltung (230) gekoppelt ist und zu einer Kommunikation mit dem externen RFID-Tag geeignet ist; und
eine Schaltungsverbindung (232), die zum Koppeln der RFID-Tag-Schaltung mit der Leserschaltung (230) gekoppelt ist, wobei der eingebaute RFID-Lese-Schreib-Tag (110) mit der Leserschaltung (230) über die Schaltungsverbindung (232) kommuniziert und mit dem externen RFID-Leser (1 a, 1 b) über die erste RF-Kommunikationsschaltung (204) kommuniziert.

2. RFID-Leser (102) nach Anspruch 1, wobei die Leserschaltung (230) mit dem eingebauten RFID-Lese-Schreib-Tag (110) zum Lesen der Information aus dem Speicher (206) zusammenarbeitet.

3. RFID-Leser (102) nach Anspruch 1 oder Anspruch 2, wobei der RFID-Leser (102) und der externe RFID-Leser (1a, 1b) mit dem eingebauten RFID-Lese-Schreib-Tag (110) in Abhängigkeit von einer Identifikation kommuniziert, die den RFID-Lese-Schreib-Tag (110) eindeutig zugewiesen ist.

4. RFID-Leser (102) nach einem der Ansprüche 1 bis 3, wobei der eingebaute RFID-Lese-Schreib-Tag (110) konfiguriert ist, um von dem externen RFID-Leser (1a, 1 b) Information bezüglich einer zeitabhängigen Anwendung oder einer Steuerungsentscheidung empfängt.

5. RFID-Leser (102) nach einem der Ansprüche 1 bis 3, wobei der eingebaute RFID-Lese-Schreib-Tag (110) konfiguriert ist, um von dem externen RFID-Leser (1a, 1b) Information bezüglich einer Konfiguration eines externen Gerätes (256) zu empfangen, und wobei der RFID-Leser (102) eine Schnittstelle zur Kommunikation mit dem externen Gerät (256) umfasst, so dass die Information bezüglich der Konfiguration des externen Gerätes (256) von dem RFID-Leser (102) an das externe Gerät (256) über die Schnittstelle zur Verfügung gestellt wird.

6. RFID-Leser (102) nach einem der Ansprüche 1 bis 5, wobei der RFID-Leser (102) eine Energieversorgung (214) zum Bereitstellen von Energie an die Leserschaltung (230) und den eingebauten RFID-Lese-Schreib-Tag (110) enthält.

7. Verfahren zur RFID-Kommunikation ("Radio Frequency Identification communication") mit einem RFID-Leser (102), der eine Leiterplatte ("printed circuit board" (PCB)) enthält, wobei die PCB (200) umfasst:
einen eingebauten RFID-Lese-Schreib-Tag (110), der dem RFID-Leser (102) eindeutig zugeordnet ist und in den RFID-Leser (102) integriert ist, wobei der eingebaute RFID-Lese-Schreib-Tag (110) eine RFID-Tag-Schaltung enthält, die einen Speicher (206) aufweist, und eine erste RF-Kommunikationsschaltung (204), die geeignet ist, mit einem externen RFID-Leser (1a, 1b) zu kommunizieren, wobei der RFID-Leser (102) weiterhin eine Leserschaltung (230) zum Lesen und Schreiben von Information auf RFID-Tags einschließlich des eingebauten RFID-Lese-Schreib-Tags (110) und eines externen Tags umfasst, eine zweite RF-Kommunikationsschaltung (220), die mit der Leserschaltung (230) gekoppelt ist und geeignet ist, mit dem externen RFID-Tag zu kommunizieren, eine Schaltungsverbindung (232), die geeignet ist, die RFID-Tag-Schaltung mit der Leserschaltung (230) zu koppeln, sowie eine Schnittstelle, die geeignet ist, mit einem externen Gerät (256) zu kommunizieren,
wobei das Verfahren umfasst:
Übertragen (306) einer Identifikation des eingebauten RFID-Lese-Schreib-Tags (110) zu dem externen RFID-Leser (1a, 1b) über die erste RF-Kommunikationsschaltung (204) des eingebauten RFID-Lese-Schreib-Tag (110);
Empfangen (308) in der ersten RF-Kommunikationsschaltung (204) des eingebauten RFID-Lese-Schreib-Tags (110), von Information von dem externen RFID-Leser (1a, 1 b);
dem RFID-Leser (102) über die Schaltungsverbindung (232) anzeigen, dass der eingebaute RFID-Lese-Schreib-Tag (110) die Information empfangen hat;
Bereitstellen (314) der Information, die von dem externen RFID-Leser (1a, 1b) empfangen wurde, für den RFID-Leser (102) über die Schaltungsverbindung (232), wobei die von dem externen RFID-Leser (1a, 1b) bereitgestellte Information Information bezüglich einer Konfiguration des externen Gerätes (256) enthält;
Übertragen, an das externe Gerät (256) der Information bezüglich der Konfiguration des externen Gerätes (256) von dem RFID-Leser (102) über die Schnittstelle;
Empfangen, in dem externen Gerät (256), der Information bezüglich der Konfiguration des externen Gerätes (256) von dem RFID-Leser (102); und
Implementieren, in dem externen Gerät (256) der Konfiguration basierend auf der Konfigurationsinformation, die von dem RFID-Leser (102) übertragen wurde.

8. Verfahren nach Anspruch 7, das weiterhin die Schritte umfasst:
in dem eingebauten RFID-Lese-Schreib-Tag (110), Empfangen (304) eines Ping von dem externen RFID-Leser (1a, 1b), wobei der Schritt zum Übertragen (306) einer Identifikation ausgeführt wird, nachdem der Ping von dem externen RFID-Leser (1a, 1b) empfangen wurde.

9. Verfahren nach Anspruch 7 oder 8, das weiterhin die Schritte aufweist:
in dem eingebauten RFID-Lese-Schreib-Tag (110), Empfangen (310) eines Ping von dem RFID-Leser (102) über die Schaltungsverbindung (232), wobei der Schritt zum Anzeigen (312) ausgeführt wird, nachdem der Ping von dem RFID-Leser (102) empfangen wurde.

10. Verfahren nach einem der Ansprüche 7 bis 9, das weiterhin die Schritte aufweist:
in dem RFID-Leser (102) oder dem externen Gerät (256), Verarbeiten der Information, die von dem eingebauten RFID-Lese-Schreib-Tag (110) gelesen wurde, für eine zeitabhängige Anwendung oder eine Steuerentscheidung.

11. Verfahren nach einem der Ansprüche 7 bis 9, wobei die von dem externen RFID-Leser (1a, 1b) über den RFID-Lese-Schreib-Tag (110) übertragene Information (306) Information bezüglich einer Konfiguration des RFID-Lesers (102) enthält.

## Revendications

1. Lecteur d'Identification par radiofréquence, RFID, (102) incluant une carte de circuit imprimé, PCB, la PCB (200) comprenant :
une étiquette de lecture-écriture RFID incorporée (110) assignée de manière unique au lecteur RFID (102) et intégrée dans le lecteur RFID (102), l'étiquette de lecture-écriture RFID incorporée (110) incluant un ensemble de circuits d'étiquette RFID ayant une mémoire (206) et un premier ensemble de circuits de communication RF (204) adapté pour communiquer avec un lecteur RFID externe (1a, 1b) ;
un ensemble de circuits de lecteur (230) adapté pour lire depuis ou écrire des informations sur des étiquettes RFID incluant l'étiquette de lecture-écriture RFID incorporée (110) et une étiquette externe ;
un second ensemble de circuits de communication RF (220) couplé à l'ensemble de circuits de lecteur (230) et adapté pour la communication avec l'étiquette RFID externe ; et
une liaison de circuit (232) adaptée pour coupler l'ensemble de circuits d'étiquette RFID à l'ensemble de circuits de lecteur (230), l'étiquette de lecture-écriture RFID incorporée (110) communiquant avec l'ensemble de circuits de lecteur (230) via la liaison de circuit (232) et communiquant avec le lecteur RFID externe (1a, 1b) via le premier ensemble de circuits de communication RF (204).

2. Lecteur RFID (102) selon la revendication 1, dans lequel l'ensemble de circuits de lecteur (230) coopère avec l'étiquette de lecture-écriture RFID incorporée (110) pour lire les informations à partir de la mémoire (206).

3. Lecteur RFID (102) selon la revendication 1 ou la revendication 2, dans lequel le lecteur RFID (102) et le lecteur RFID externe (la, 1b) communiquent avec l'étiquette de lecture-écriture RFID incorporée (110) en fonction d'une identification assignée de manière unique à l'étiquette de lecture-écriture RFID (110).

4. Lecteur RFID (102) selon l'une quelconque des revendications 1 à 3, dans lequel l'étiquette de lecture-écriture RFID incorporée (110) est configurée pour recevoir, en provenance du lecteur RFID externe (1a, 1b), des informations pour une application dépendante du temps ou une décision de commande.

5. Lecteur RFID (102) selon l'une quelconque des revendications 1 à 3, dans lequel l'étiquette de lecture-écriture RFID incorporée (110) est configurée pour recevoir, en provenance du lecteur RFID externe (la, 1b), des informations sur la configuration d'un dispositif externe (256), et dans lequel le lecteur RFID (102) comprend une interface pour la communication avec le dispositif externe (256) de sorte que les informations sur la configuration du dispositif externe (256) soient fournies du lecteur RFID (102) au dispositif externe (256) via l'interface.

6. Lecteur RFID (102) selon dans l'une quelconque des revendications 1 à 5, dans lequel le lecteur RFID (102) inclut une alimentation (214) pour alimenter l'ensemble de circuits de lecteur (230) et l'étiquette de lecture-écriture RFID incorporée (110).

7. Procédé pour une communication d'Identification par radiofréquence, RFID, avec un lecteur RFID (102) incluant une carte de circuit imprimé, PCB, la PCB (200) comprenant :
une étiquette de lecture-écriture RFID incorporée (110) assignée de manière unique au lecteur RFID (102) et intégrée dans l'ensemble de circuits de lecteur (230), l'étiquette de lecture-écriture RFID incorporée (110) incluant un ensemble de circuits d'étiquette RFID ayant une mémoire (206) et un ensemble de circuits de communication RF (204) adapté pour communiquer avec un lecteur RFID externe (1a, 1b), le lecteur RFID (102) comprenant en outre un ensemble de circuits de lecteur (230) pour lire et écrire des informations sur des étiquettes RFID incluant l'étiquette de lecture-écriture RFID incorporée (110) et une étiquette externe, un second ensemble de circuits de communication RF (220) couplé à l'ensemble de circuits de lecteur (230) et adapté pour la communication avec l'étiquette RFID externe, une liaison de circuit (232) adaptée pour coupler l'ensemble de circuits d'étiquette RFID à l'ensemble de circuits de lecteur (230), et une interface adaptée pour la communication avec un dispositif externe (256),
le procédé comprenant :
le transfert (306) d'une identification de l'étiquette de lecture-écriture RFID incorporée (110) au lecteur RFID externe (1a, 1b) via le premier ensemble de circuits de communication RF (204) de l'étiquette de lecture-écriture RFID incorporée (110) ;
la réception (308), dans le premier ensemble de circuits de communication RF (204) de l'étiquette de lecture-écriture RFID incorporée (110), d'informations en provenance du lecteur RFID externe (1a, 1b) ;
l'indication (312) au lecteur RFID (102) via la liaison de circuit (232) que l'étiquette de lecture-écriture RFID incorporée (110) a reçu les informations ;
la fourniture (314) des informations reçues du lecteur RFID externe (1a, 1b) au lecteur RFID (102) via la liaison de circuit (232), les informations fournies depuis le lecteur RFID externe (1a, 1b) incluant des informations sur la configuration du dispositif externe (256) ;
le transfert au dispositif externe (256) des informations sur la configuration du dispositif externe (256), depuis le lecteur RFID (102) via l'interface ;
la réception, dans le dispositif externe (256), des informations sur la configuration du dispositif externe (256) en provenance du lecteur RFID (102) ; et
la mise en oeuvre, dans le dispositif externe (256), de la configuration sur la base des informations de configuration transférées depuis le lecteur RFID (102).

8. Procédé selon la revendication 7, comprenant en outre l'étape de :
dans l'étiquette de lecture-écriture RFID incorporée (110), réception (304) d'un ping en provenance du lecteur RFID externe (1a, 1b), l'étape de transfert (306) d'une identification étant exécutée après que le ping en provenance du lecteur RFID externe (1a, 1b) est reçu.

9. Procédé selon la revendication 7 ou 8, comprenant en outre l'étape de :
dans l'étiquette de lecture-écriture RFID incorporée (110), réception (310) d'un ping en provenance du lecteur RFID (102) via la liaison de circuit (232), l'étape d'indication (312) étant exécutée après que le ping en provenance du lecteur RFID (102) est reçu.

10. Procédé selon dans l'une quelconque des revendications 7 à 9, comprenant en outre l'étape de :
dans le lecteur RFID (102) ou le dispositif externe (256), traitement des informations lues à partir de l'étiquette de lecture-écriture RFID incorporée (110) pour une application dépendante du temps ou une décision de commande.

11. Procédé selon dans l'une quelconque des revendications 7 à 9, dans lequel les informations transférées (306) depuis le lecteur RFID externe (1a, 1b) par l'intermédiaire de l'étiquette de lecture-écriture RFID (110) incluent des informations sur la configuration du lecteur RFID (102).
